# EUROPEAN PATENT APPLICATION

(11) **EP 4 781 823 A1**
(43) Date of publication of application: **29.07.2026**
(21) Application number: 24866609.1
(22) Date of filing: 17.09.2024
(51) Int. Cl.: A01K 45/00

(54) **IMPROVEMENT TO A SANITIZING DEVICE APPLIED TO A MODULE AND A DEVICE FOR INJECTION INTO EGGS OF SUBSTANCES OF INTEREST, AND OPERATING LOGIC THEREFOR**

(30) Priority: 19.09.2023 BR 102023019083
(71) Applicant: Ion - In-Ovo Nutrition Industria e Comercio De Nutricao Animal e Equipamentos LTDA, 13503-020 Rio Claro (BR)
(72) Inventor: TELLES ASSUNÇÃO, Hernani, 13451-053 Santa Barbara D' Oeste (BR); SCHLICK, Artur, 95905-030 Lajeado (BR)
(74) Representative: dompatent
(86) International application number: PCT/BR2024/050421
(87) International publication number: WO 2025/059741

(57) **Abstract**

**"IMPROVEMENT APPLIED IN SANITIZATION DEVICE APPLIED IN MODULE AND DEVICE FOR IN OVO INJECTION OF SUBSTANCES OF INTEREST** AND OPERATIONAL LOGIC THEREOF" represented by an inventive solution in the poultry sector, notably for the stage of in ovo fertile "inoculation of substances", in which a specific system is widely used for this purpose, which involves an in ovo substance inoculation module (M3), which in turn is formed among several devices, the in ovo injector device (d32) of substances of interest and the sanitization device (d34), to which specific improvements were conceived in an independent sanitization system, interchangeable needle system, and sealing system for sanitization, the latter being formed by a dynamic sealing component (g1), made of elastomeric or similar material, wherein a body (g11) is defined with a central opening (g12) and a bellows conformation is defined at its upper end (g13).

## Description

### TERMINOLOGY

For the purpose of a better understanding of the matter revealed and claimed in this patent application, the meaning of some terms and acronyms richly cited in the body of the specification is presented, namely:
- Poultry farming: raising poultry for food production, especially meat and eggs.
- Poultry species: among the species raised in poultry farming, chicken deserves to be highlighted, and to a much lesser extent, birds such as turkeys, ducks, geese, quails and ostriches are also raised.
- Fertile egg: also known as galled egg, is understood as an egg already fertilized by the rooster, which will generate an embryo that will develop until its final formation as a bird.
- Embryo: for the purposes of this invention it is an immature organism, in the early stages of development, before leaving the interior of the fertile egg.
- Amniotic fluid: or amniotic liquid, is the fluid that surrounds the embryo, filling the amniotic sac, which acts as protection from mechanical and thermal shocks and also as nutritional food, on which the embryo feeds during its development inside the egg itself.
- Control factors: in order to ensure the production of poultry with quality and productivity, notably broiler chickens, specific vaccination (disease control) and nutritional procedures (obtaining birds with weight, meat quality, etc.) are planned for the bird embryo.
- Intra-egg interference: also known as "in ovo", it corresponds to any interference of an external nature applied inside an egg, commonly performed for vaccination and/or nutrition of fertile eggs of avian species, especially in broilers.
- In ovo feeding: it is performed in the pre-hatching phase of the egg where the shell of the embryonated egg is punctually perforated and then the nutrient is inoculated directly into the amniotic fluid by means of a syringe, and from the 15th day of incubation the embryo begins to ingest the amniotic fluid with an incorporated nutritional supplement (Klasing, 1998).
- Substance of interest: must be understood as the universe of substances such as vaccines, nutrients, among others used in the processing of egg culture, notably fertile eggs.
- Inoculation module of fertile in ovo substances: responsible for the inoculation of vaccines and/or nutrients in all fertile eggs pre-classified in the candling module.
- In ovo injection device: main device that integrates the "Inoculation module" of substances of fertile in ovo interest, responsible for the actual inoculation of vaccines and/or nutrients in all fertile eggs pre-classified in the candling module.
- Sanitization: must be understood as the procedure for sterilizing channels for conducting substances of interest of devices such as injectors of "in ovo" substances.
- Setup: refers to the activities involved in changing production orders that require adjustments and replacement of devices, in shared equipment.
- IPC: An acronym in English for International Patent Classification has been in force since 1968. The Strasbourg Agreement (1971) established a common classification for patents of invention.
- CPC: English acronym for Cooperative Patent Classification for classifying patent applications.
- Man of the trade: according to the understanding of the treatisers CHAVANNE, Albert & BURST, Jean-Jacques, in their work Droit de Lá Propriété Industrielle. Paris: Dalloz, 1993, p.53-55, in a remissive way, is the person skilled in the art who possesses the normal and average knowledge of the technique that will be the object of analysis of the present patent of invention, who is the technician knowledgeable about and specifier of equipment applied in the practice of poultry farming.

The list of terms, technologies, and technical concepts presented in this preliminary topic must be considered for the correct understanding of the patent of invention, providing the mandatory descriptive sufficiency to the body of this specification, as well as being used as a reference for studies in comparative analyses, whether with hypothetical solutions of the state of the art relevant to the invention and not cited in this cartouche, as well as for products of the same nature and same international patent classification, IPC and/or Cooperative Patent Classification - CPC disclosed and/or commercialized by third parties who are not the holder(s) of this patent of invention.

### BRIEF DESCRIPTION OF THE FIGURES

To complement the description in order to obtain a better understanding of the characteristics of the present patent of invention and according to a preferred embodiment thereof, the description is accompanied, attached, by a set of block diagrams, drawings representing a generic embodiment of a conventional sanitization system applied to in ovo injectors, and drawings representing a preferred embodiment for the new improved sanitization system applied to in ovo injectors, where:
Figure .1a is an enlarged detailed view of a fertile egg during an in ovo substance inoculation procedure, showing the occurrence of needle penetration into the interior of the egg.
Figure .1b is a representation in the form of a block diagram, representative of the general architecture of an in ovo inoculation system for substances of interest, evidencing the operational module of interest, that is, the improved sanitization module that acts directly on the in ovo substance inoculation module.
Figure .2 is an illustrative representation of an in ovo injection device to which the conventional sanitization device is applied, notably the device disclosed in patent document PI 9207205-4 B1 filed on 09/11/1992 under the title "DEVICE FOR EGG INJECTION", evidencing the main component parts thereof.
Figure .3 is an illustrative representation of an in ovo injection device in a generic manner, representing the components of interest that make up or receive the conventional sanitization system, identified in the example of the prior art in figure .2, which support the understanding of the limiting technical aspects that required the solution to the problem identified by the applicant;
Figure .4 is an illustrative representation in front view of a model of in ovo injector device of substances of interest to which an improved sanitization system/device is applied;
Figure .5 is an illustrative representation in a longitudinal section view of a model of in ovo injector device of substances of interest to which an improved sanitization system/device is applied, evidencing the claimed improvements.
Figure .6 is an illustrative representation in a longitudinal section view of a model of in ovo injector device of substances of interest to which an improved sanitization system/device is applied, evidencing the claimed improvement for the sanitizer feed flow path from its entry into the in ovo injector device to the feed next to the injection needles and punch.
Figure .7a is an illustrative representation in front view of the improvement in the form of a needle interchangeability system applied to in ovo injector devices of substances of interest, evidencing their component elements.
Figure .7b is an illustrative representation in a longitudinal section view of the improvement in the form of a needle interchangeability system applied to in ovo injector devices of substances of interest, highlighting their component elements.
Figure .7c is an illustrative representation in front view of the improvement in the form of a sealing system for sanitization applied to in ovo injector devices of substances of interest, evidencing the component elements thereof.
Figure .7d is an illustrative representation in a longitudinal section view of the improvement in the form of a sealing system for sanitization applied to in ovo injector devices of substances of interest, evidencing their component elements.
Figure .7e is an illustrative representation in front view of the improvement in the form of a sealing system for sanitization mounted on the needle interchangeability system.
Figure .7f is an illustrative representation in longitudinal section view of the improvement in the form of a sealing system for sanitization mounted on the needle interchangeability system.
Figure .8 is an illustrative representation in exploded front view and in longitudinal section of the improvement in dynamic sealing element applied to the sanitization system of in ovo injector devices of substances of interest.
Figure .9 is an illustrative representation in a longitudinal section view of a model of an in ovo injector device for substances of interest, to which an improved sanitization system/device is applied, evidencing the claimed improvement for the path of the sanitizer feed flow from its entry into the in ovo injector device to the feed next to the injection needles and punch, indicating the feed flow of the sanitizing substance until it meets the needles and punch.
Figure .10a is an illustrative representation in longitudinal and enlarged view of the kinematics developed by the new dynamic sealing element applied to the in ovo injector device, immediately before its upward movement within the intermediate housing.
Figure .10b is an illustrative representation in longitudinal and enlarged sectional view of the kinematics developed by the new dynamic sealing element applied to the in ovo injector device, during the upward movement inside the intermediate housing; and
Figure .10c is an illustrative representation in a longitudinal and enlarged sectional view of the kinematics developed by the new dynamic sealing element applied to the in ovo injector device, at the end of its movement within the intermediate housing, showing its compression and storage of kinetic energy for subsequent release and facilitation of the next downward movements of the needles and punch.

### DEMAND FOR INVENTION

### a. Introduction

The injection of substances such as vaccines into live eggs (with embryos) is widely adopted by the poultry sector, as it confers beneficial effects to the health of the bird that will hatch from inside the egg in which it is gestated.

In this wake, this poultry sector realized that the in ovo injection of substances such as vaccines and/or nutrients confers greater ease, control, and final quality for the beneficial effects than the practice of applying these substances to the bird already hatched from inside the egg.

This scenario occurs because it has been proven to be more efficient to keep eggs with embryos immobile and handle them in a controlled way, which is much more complex to achieve for a condition of birds that have already hatched, as they exhibit frenetic movement.

### b. Concept of inoculation of in ovo substances

In view of the proven convenience of in ovo inoculation of poultry with substances of interest, such as vaccines and/or nutrients, the poultry sector has benefited from the use of solutions for this purpose, with the most basic concept, see figure .1a, being described by reference as the technique in which forced inoculation is performed on the eggshell (Ca) of the egg (Ov), using some pressurization tool, for example a punch (Et1) or even physically forcing an opening in this shell (Ca).

Next, the in ovo inoculation of the substance of interest itself is carried out using any needle arrangement (Et2), this being the most basic technique for this procedure, thus pouring the substance of interest, nutrient, for example, into the amniotic fluid (Li) and vaccine, for example, into the embryo (Em).

In this context, men who are specialists in the practice of handling fertile eggs (Ov) know that as soon as the punch (Et2) and needle (Et2) withdraw their ends from inside this egg (Ov), they bring with them residual material formed both by the substance of interest, such as a vaccine or nutrient, and by organic material, such as amniotic fluid and even blood resulting from the intravenous interference of the needle (Et2) as well as the epidermis of the embryo (Em).

In view of this scenario, the practice of a sanitization procedure of the punch (Et1) and needle (Et2) elements is mandatory, with the main objective of providing their sterilization and consequent elimination of any risk of contamination of subsequent eggs (Ov) that will receive the next doses of substances of interest.

It is exactly in this context that the demand for the present invention resides, which preferably aims to render the sanitization devices provided with greater durability, as well as to ensure that their operation with the in ovo injection device is limited to the effectiveness of the sanitization of the punch (Et1) and needle (Et2) elements, mitigating interference in the displacement kinematics of pneumatic pistons that determine the downward/upward movement of these elements in relation to the egg (Ov).

### FIELD OF APPLICATION

The present patent of invention with the title above and object of description and claim in this cartouche is related to an inventive solution that finds outstanding benefit in the poultry sector, intended for the reproduction of birds, and more specifically in the area of creation and development of embryos for the creation of poultry species.

For better positioning of the field of application, or technical field, those skilled in the industrial activity in the area of fertile egg (Ov) production know, as in the case illustrated in figure .1a, that this activity has embarked on a degree of complexity that involves the macro stages:
- Identification of fertile eggs;
- Inoculation of substances in fertile eggs; and
- Incubation of fertile eggs.

For the purposes of this patent, the invention finds specific utility in the stage of "inoculation of substances" in fertile eggs (vaccines, nutrients and even nutritional vaccine complexes.

In turn, the "inoculation of substances" stage has defined an equally complex system, formed by the functional modules, see figure .1b:
- Operational control module (M1);
- Candling module (M2);
- In ovo substance inoculation module (M3); and
- Treated fertile egg transfer module (M4), where after being vaccinated the eggs are transferred from the tray to the hatcher basket and then taken to the hatcher module itself.

In turn, the in ovos ubstance inoculation module (M3) has defined the devices:
- Support platform device (d31);
- Substance of interest injector device (d32);
- Injector stabilizing device (d33); and
- Sanitization device (d34).

For the purpose of this invention, improvements were devised specifically to be applied to the sanitization device (d34), whose components are incorporated into the body of the device injecting the substance of interest (d32).

To be more specific, the present invention finds particular application in a dynamic system, wherein the needle of the injector is free.

### INVENTION REQUIREMENTS

In line with the demand for the invention, the applicant devised the "*improvement applied in sanitization device applied in module and in ovo injection device of substances of interest and operational logic thereof"* provided with novelty associated with inventive step, as it does not follow in an obvious or evident way from other techniques anticipated by the state of the art, conferring advantages from the industrial, commercial and technical points of view*.*

In addition, the *invention* is provided with industrial applicability, being economically viable and, therefore, meeting the rigor of the patentability requirements, notably as a patent of invention.

### FUNDAMENTALS OF TECHNIQUE

In order to provide veracity, and consolidate the context explained in the topics of the introductory table, an explanation will be presented about the state of the art for sanitization devices applied to in ovo injector devices, where after critical analysis of these, once evaluated by persons skilled in the art their limiting aspects were identified, thus consolidating the identification of the previously mentioned demand.

### a. On the conventional technique

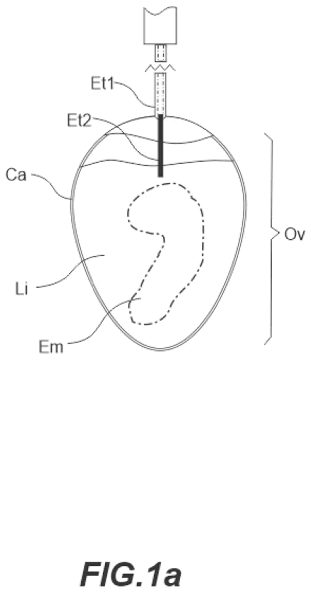

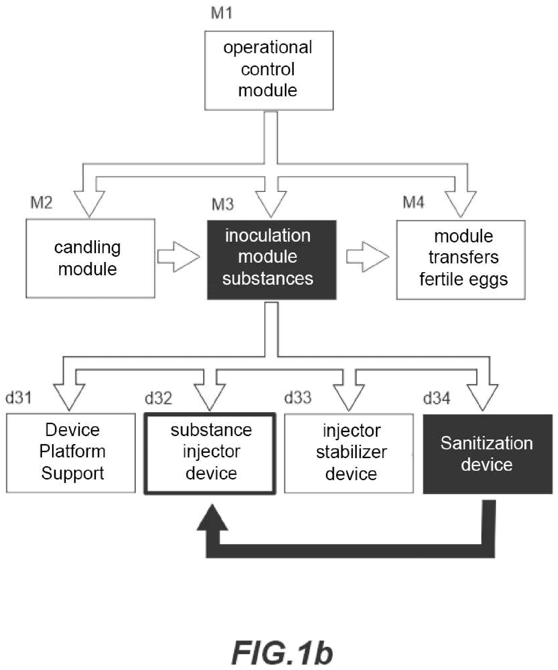

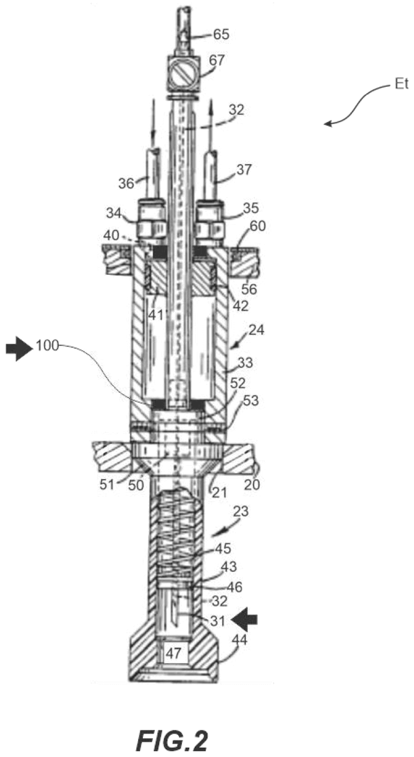

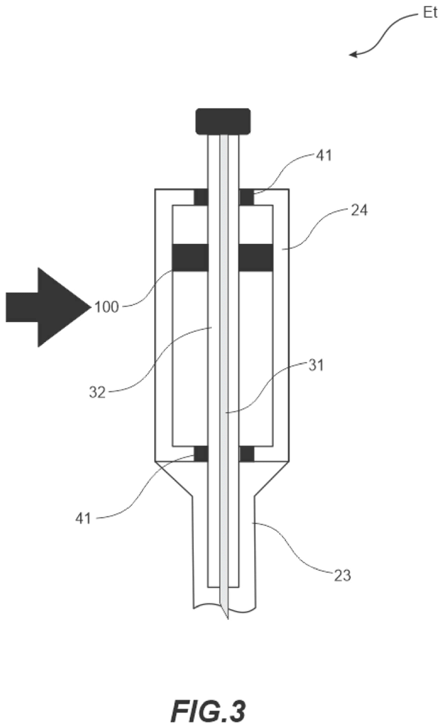

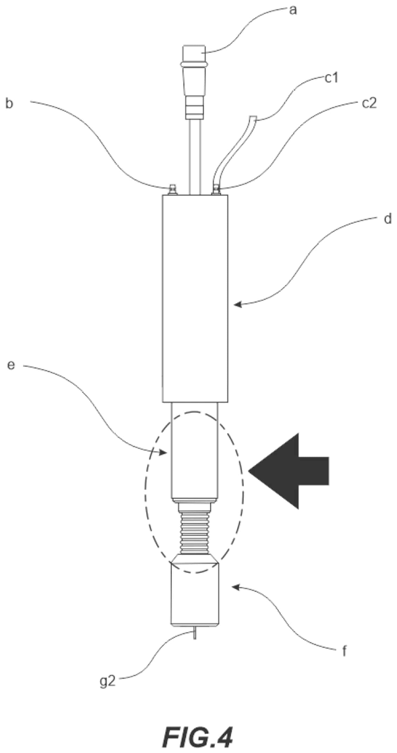

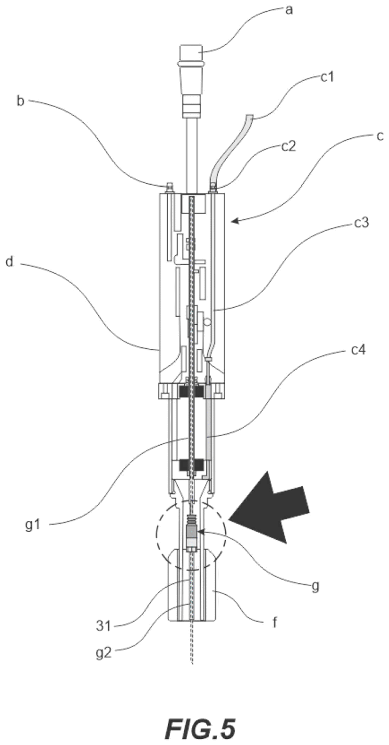

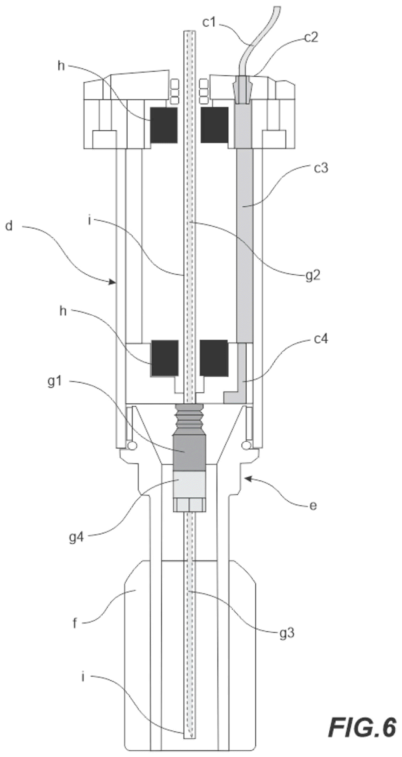

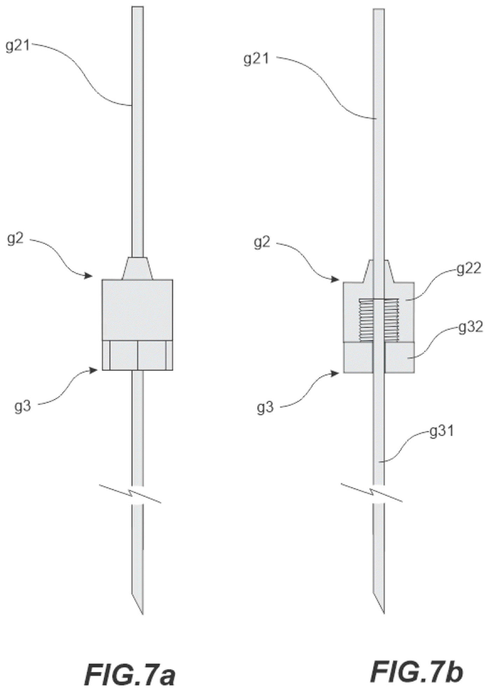

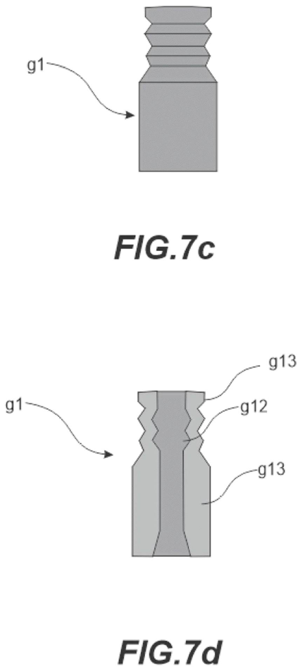

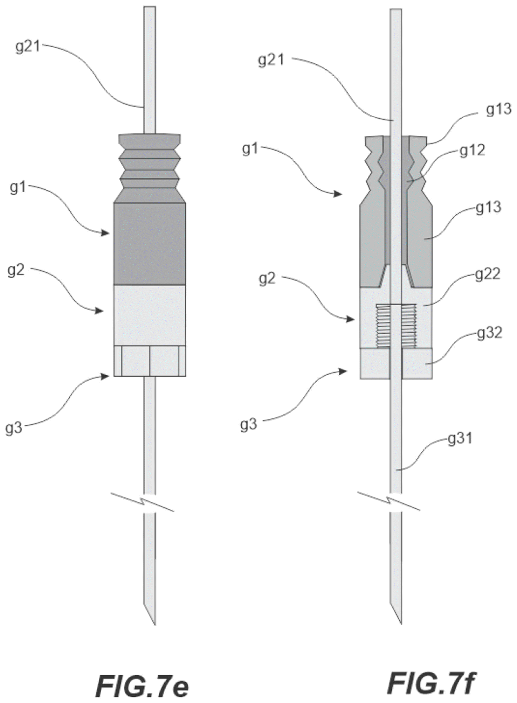

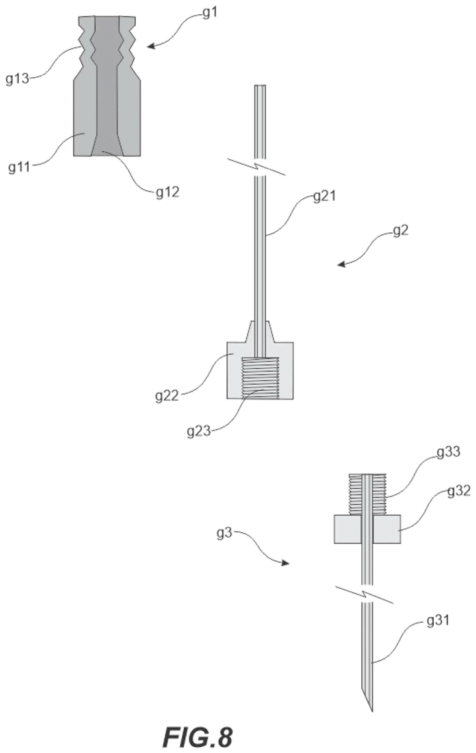

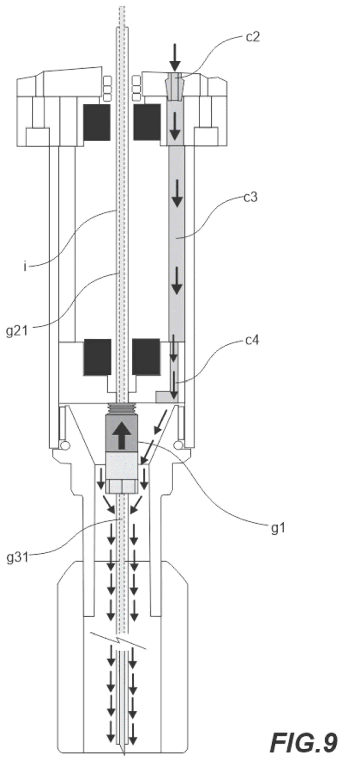

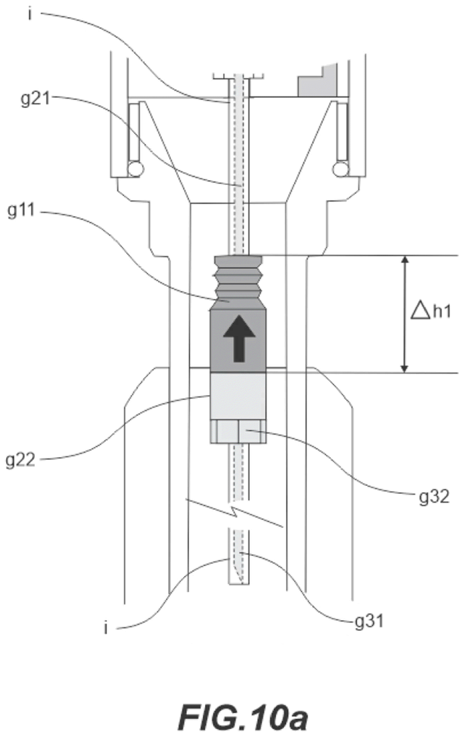

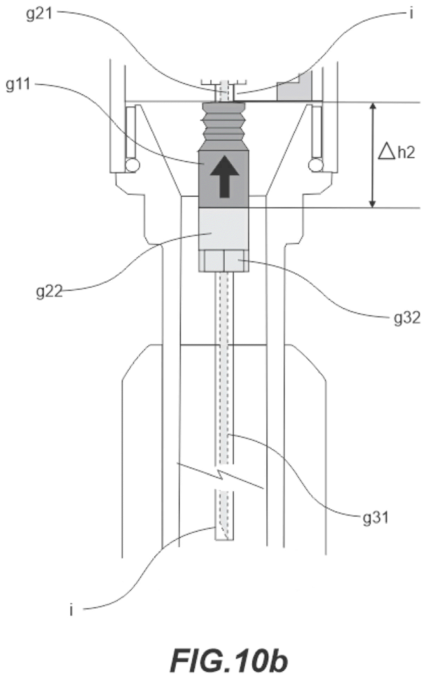

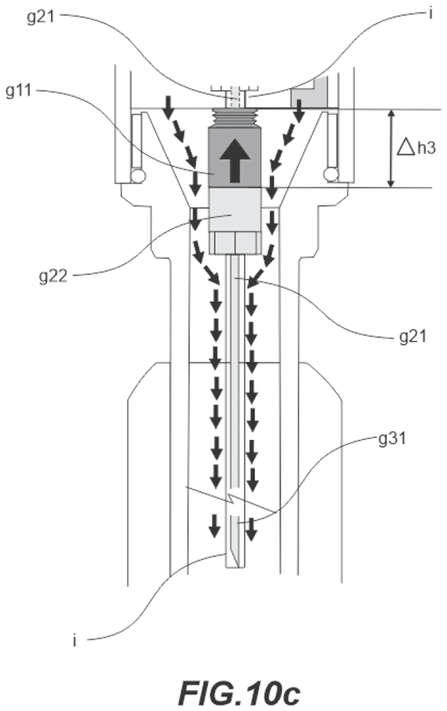

Experts in the area of fertile egg (Ov) management, that is, in the condition illustrated in figure1a know, that the concept of perforation and subsequent injection of in ovo substances are widely known in the state of the art, and research in a patent database consolidates this understanding, where it is pertinent to list:
**D1:** U.S. patent US5136979, entitled "MODULAR INJECTION SYSTEM FOR AVIAN EMBRYOS", published on 08/11/1992;
**D2:** U.S. patent US5438954A entitled "METHOD AND APPARATUS FOR INITIAL EMBRYONIC INJECTION IN OVO";
**D3:** European patent WO1999034667A1 entitled "AUTOMATED IN OVO INJECTION APPARATUS";
**D4:** U.S. patent US6286455B1 entitled "AUTOMATED IN OVO INJECTION APPARATUS";
**D5:** U.S. patent US6668753B2 entitled "METHODS AND APPARATUS FOR DISPENSING FLUID TO EGG INJECTION DEVICES";
**D6:** U.S. patent US20070215050A1 entitled "SYSTEMS AND METHODS FOR SANITIZING EGG PROCESSING EQUIPMENT";
**D7:** U.S. patent US20060075973A1 entitled "METHODS AND APPARATUS FOR INJECTION AND SAMPLING OF MATERIAL THROUGH AVIAN EGG MEMBRANES";
**D8:** U.S. patent US20070044721A1 entitled "IN OVO INJECTION ADMINISTRATION DEVICE WITH INTEGRATED PUMP AND INJECTION NEEDLE";
**D9:** U.S. patent WO2009002397A1 entitled "METHODS AND APPARATUS FOR DELIVERY OF VARIOUS SUBSTANCES IN OVO"; and
**D10:** U.S. patent US20160007575A1 entitled "SANITIZATION SYSTEM FOR AN EGG PROCESSING APPARATUS AND ASSOCIATED METHOD."

From this list of ten (10) patent document publications, all revealing the use of the punch (Et1) and needle (Et2) components, as shown in figure .1a, the documents that focus on or at least mention the sanitization module, which is the specific technical field of the present invention, are patent documents D1 U.S. Patent US5136979, D6 U.S. Patent US20070215050A1, and D10 U.S. Patent US20160007575A1.

Therefore, for the purpose of better understanding the problem to be solved, patent document D1 U.S. patent US5136979 is chosen, which has among numerous territorial extensions, Brazilian patent PI 9207205-4 B1, this being defined as a paradigm for the studies and identification of the problem to be solved.

Having made this brief introduction, the in ovo injector device of patent PI 9207205-4 B1 (US5136979) can be better understood by reading its figure .3, herein represented by figure .2, where the components are listed:
- Machined plate (20);
- Bottom of the injector (23);
- Upper part of the injector (24);
- Punch (31);
- needle (32);
- pneumatic cylinder (33);
- air intake trim (34);
- air intake trim (35);
- air supply pipes/hoses (36);
- air supply pipes/hoses (37);
- opening (40) of the pneumatic cylinder (33);
- piston (41);
- annular seal (42);
- Punch (32) guide (43);
- Larger diameter opening (44) of the guide (43);
- propelling spring (45);
- Head (46) of the propelling spring (45);
- Punch (31) stop washer (47);
- Propelling spring (45) stop (50);
- Larger diameter opening (51) of the guide (43);
- cylindrical upper part (52) of the punch (31);
- fixing screws (53);
- stabilizing plate (56) solidary to the machined plate (20);
- inflatable bladder (60);
- hose trim (65); and
- sterilization fluid inlet trim (67).

### c. Identification of the components of interest

The applicant, after carefully examining the constructive concept of the injector device disclosed in patent document PI 9207205-4 B1, when selecting the components that have a functional role directly related to the sanitization system, identified as components of interest for critical analysis, which are remissively presented in figure .3, cited herein:
- plunger (100); and
- Needle (31).

### d. Critical analysis - identification of problems

The applicant identified that the kinematics of the plunger (100) with downward and upward movements, in solidarity with the external surface of the needle (31), brings in its core the list of problems/limitations:
- Interference between the plunger (100) with the needle (31) or needle rod, generates unwanted resistance, thus creating an obstacle that compromises the displacement kinematics of the plunger (100).
- The resistance identified for the piston displacement kinematics (100) creates overload to the mechanism, notably in the pneumatic mode of the injector device, leading to the compromise of parts and the need for corrective maintenance of the device.
- the interference between the plunger (100) and the inner wall of the upper body (24) of the injector, generates undesirable friction, which in turn converges in the premature wear of the outer perimeter of the plunger (100), imposing the need for its premature replacement, which is enhanced by the repeatability of the injection operation of substances of interest.
- As a result of the previous conditions, a high operating cost is experienced due to the need for constant replacement of the component parts, notably the piston (100).
- The aforementioned interference of the plunger (100) with the needle (31) or needle rod, confers inaccuracy in the controlled displacement of the needle advance (31) when considering the injector device with an embedded intelligent advance system, such as the system revealed and claimed in Brazilian patent document BR 10 2017 023563 7, filed on 10/31/2017, under the title DEVICE AND PROCEDURE FOR INTELLIGENT INJECTION OF A FERTILE IN OVO SUBSTANCE".

In addition, the applicant also identified as a restrictive aspect the use of a single needle) Et1) per injector unit, which makes the replacement procedure difficult in case of need for corrective or even predictive maintenance.

### PROPOSAL OF THE INVENTION

### a. Objective

The applicant, upon identifying the restrictive aspects previously listed, defined as the objective of this invention the search for a solution that allows them to be solved, conferring advantages listed as follows (in a remissive manner):
- Provide greater durability to the component parts of the in ovo injector device, notably for the plunger and needle elements.
- Mitigate interference in the sanitization procedure of the punch and needles without compromising its kinematics;
- Customize the flow of substances of sanitizing interest with improvement of the internal layout of distribution of component parts of the in ovo injector device;
- To give greater precision to the kinematics of the movement of the needle element, making it feasible to apply it in intra-egg injector devices with programming of in ovo forward movements of the needle in an intelligent (controlled) way; and
- Mitigate the costs and periodicity of maintenance of the in ovo injector device.

### b. Distinguishing characteristics

In order to make the purpose of the invention feasible, improvements defined as follows were conceived:
- Independent sanitization system: dedicated exclusively to the flow of a substance of sanitizing interest to the needle;
- Needle interchangeability system, where a tip needle is coupled to the main needle, which effectively performs the in ovo injection of the substance of interest; and
- Sealing system for sanitization, where the conventional plunger gives way to a dynamic sealing element, mounted in such a way as to embrace the body of the main needle and with freedom of movement, without interference with the internal walls of the upper body of the in ovo injector device.

### c. Desired technical effect

With the application of the conceived improvements, the list of positive and non-limiting aspects was observed:
- The independent sanitization system provides greater safety to the injection system, as the solidary use of transport ducts for substances of interest, such as vaccines or nutrients, is no longer practiced;
- The interchangeable needle system makes corrective/predictive maintenance operations of the needle easier, whether due to non-compliance or exhaustion of its use, further adding even greater safety against contamination of substances of interest such as vaccines or nutrients with sanitizing substance residue;
- The sealing system for sanitization provides a significant reduction in the resistance to the kinematics of downward and upward movement of the needle and/or rod of the in ovo injector device, making its application in any in ovo injector device, especially in the intelligent injector, as revealed in Brazilian patent document BR 10 2017 023563 7, filed on 10/31/2017, entitled DEVICE AND PROCEDURE FOR INTELLIGENT INJECTION OF FERTILE IN OVO SUBSTANCE".

### DETAILED DESCRIPTION

The following detailed description should be read and interpreted with reference to the drawings presented, representing a preferred embodiment for the improvements developed, and is not intended to limit the scope of the invention, which is limited only to what is explained in the set of claims.

### a. Constructive concept of improvements

The observation of figures .4 and .5 allows a broad understanding of the improvements applied to the in ovo injector device, being applicable to all kinds of models, conventional or even injector devices with intelligent systems, such as the device disclosed and claimed in Brazilian patent of invention BR 10 2017 023563 7, filed on 10/31/2017, entitled DEVICE AND PROCEDURE OF INTELLIGENT INJECTION OF IN OVO FERTILE SUBSTANCE", wherein the component parts are defined:

### a.1 Injector Technology Base

- cable (A), specifically eight-way cable, for application in stepper motor with sensors;
- connector (b) for entry of the substance of interest to be injected into fertile eggs (Ov), see figure .1a;
- Connector (C3) for coupling a hose (C1) for the supply of sanitizing substance;
- upper body (d) of the in ovo injector device;
- intermediate body (e) of the in ovo injector device;
- lower cup (f) of the in ovo injector device;
- needle (g); and
   a.2 Independent sanitization system (c): as shown in figures .5 and .6, is defined by the hose (c1) duly connected to the upper part of the connector (c2), which at its lower part connects to the duct (c3) that leads to the duct (c4), which in turn has the free lower end positioned adjacent to the main needle element (g2);

### a.2 Needle interchangeability system

As illustrated in figures .5, .6, .7a, .7b and .8. whose constructive concept is formed by:
- a main needle (g2), formed by the functional body (g21) whose lower end is delimited by a socket base (g22), with a bottom defined by a threaded female area (g23); and
- An interchangeable needle (g3), formed by the functional body (g31) whose upper end is delimited by a socket base (g32), with threaded male protrusion (g33). **a.3 Sanitization Sealing System**

As illustrated in Figures .5, .6, .7c, .7d and .8. whose constructive concept is formed by a single flexible piece, called dynamic sealer (g1), made of elastomeric material or similar, formed by a body (g11) with a central opening (g12) with a bellows conformation (g13) defined at its upper end that allows the accumulation of energy (like a spring) when it is tensioned under the lower part of the upper body (d) of the in ovo injector device.

### a.4 Assembly of the set

As illustrated in figures .5, .6, .7e, .7f and .8. whose constructive concept is formed by the dynamic sealer (g1), to be assembled in a pass-through way through the functional body (g21) of the main needle (g2), whereby the base of this functional body (g21) acts as a support for the lower part of the body (g11) of the dynamic sealer (g1).

### b. Functional/operational concept of improvements

### b.1 Independent sanitization system (c)

As shown in Figure .9, the flow of sanitizing substance (-->) reaches the in ovo injector device through the hose (c1) and follows the ducts (c3) and (c4) respectively until it reaches the main needle element (g2) and next the interchangeable needle (g3) and further, the punch (i).

### b.2 Needle interchangeability system

As illustrated in figures .7a, .7b and .8, obtained by mounting a threaded female area (g23) of the body (g21) of the main needle (g2) onto the threaded male protrusion (g33) of the body (g31) of the interchangeable needle (g3).

### b.3 Sanitization sealing system

As illustrated in figures .10a, .10b and .10c, whose functional concept lies in providing displacement of the dynamic sealer (g1) along the body (g21) of the main needle (g2), where, for example, it describes upward movement towards the lower part of the upper body (d), that is, when the needles (g2) and (g3) are retracted, and as demonstrated, when the interference is initiated, the bellows (g13) begin to be compressed, describing successive reductions (ΔH1), (ΔH2) and (ΔH3), for example, storing energy that, when released, helps to move the set of needles (g2) and (g3) from the inertia condition at the initial moment of advancement, preventing false triggering in the needle sensor, in the case of an intelligent system, such as that of Brazilian patent BR 10 2017 023563 7, filed on 10/31/2017, entitled DEVICE AND PROCEDURE OF INTELLIGENT INJECTION OF IN OVO FERTILE SUBSTANCE."

The choice of the preferred embodiment of the invention object of claim in this cartouche, described in this detail topic, is provided only as an example. Alterations, modifications and variations may be made for any other embodiments of the improvements listed herein and described in detail, these alterations may be conceived by those skilled in the art without, however, diverging from the objective revealed in the application of this patent, which is exclusively defined by the attached claims.

It can be seen from what has been described and illustrated that the "IMPROVEMENT APPLIED IN SANITIZATION DEVICE APPLIED IN MODULE AND DEVICE FOR IN OVO INJECTION OF SUBSTANCES OF INTEREST" claimed herein falls within the rules that govern the patent of invention in light of the Industrial Property Law, deserving, for what has been exposed and as a consequence, the respective privilege.

## Claims

1. **"IMPROVEMENT APPLIED TO SANITIZATION DEVICE APPLIED IN MODULE AND IN OVO INJECTION DEVICE OF SUBSTANCES OF INTEREST",** where for the in ovo substance inoculation module (M3), specifically for the in ovo injector device (d32) of substances of interest and the sanitization device (d34), the improvements are **characterized by** an independent sanitization system (c) defined by a hose (c1) connected to the upper part of the connector (c2) which at its lower part connects to the duct (c3) that leads to the duct (c4) which in turn has the lower free end positioned adjacent to the main needle element (g2); a needle interchangeability system formed by a main needle (g2), composed of the functional body (g21) whose lower end is delimited by a fitting base (g22), with a bottom defined by a threaded female area (g23) and an interchangeable needle (g3), formed by the functional body (g31) whose upper end is delimited by a fitting base (g32), with a threaded male protrusion (g33), with the assembly of the threaded female area (g23) of the main needle (g2) onto the threaded male protrusion (g33) of the interchangeable needle; a sealing system for sanitization formed by a dynamic sealer (g1), made of elastomeric material or similar, wherein a body (g11) with a central opening (g12) is defined, with a bellows conformation (g13) defined at its upper end, whereby the assembly of the set is done by the dynamic sealer (g1) passing through the functional body (g21) of the main needle (g2) and being accommodated in the fitting base (g22) of the main needle (g2).

2. **"OPERATIONAL LOGIC"** of the improvement in sanitization device**,** to claim 1, **characterized by** the displacement of the dynamic seal (g1) along the body (g21) of the main needle (g2), with an upward movement toward the lower part of the upper body (d), that is, when the needles (g2) and (g3) are retracted, and when the interference of the bellows (g13) begins, they become compressed, describing successive reductions (ΔH1), (ΔH2) and (ΔH3), for example, storing energy that, when released, helps to move the set of needles (g2) and (g3) from the inertia condition at the initial moment of their advancement out of the lower cup (f) of the in ovo injector device.
